# EUROPÄISCHE PATENTSCHRIFT

(11) **EP 2 147 063 B1**
(45) Veröffentlichungstag und Bekanntmachung des Hinweises auf die Patenterteilung: **11.02.2015**
(21) Anmeldenummer: 08733827.3
(22) Anmeldetag: 04.05.2008
(51) Int. Cl.: C09D 5/02, A23N 15/00, C09D 5/14, A23N 1/00

(54) **KOMPONENTE EINER DER VERARBEITUNG VON NAHRUNGSMITTELN DIENENDEN MASCHINE**
COMPONENT OF A MACHINE WHICH SERVES TO PROCESS FOOD PRODUCTS
COMPOSANT D'UNE MACHINE SERVANT AU TRAITEMENT DE PRODUITS ALIMENTAIRES

(30) Priorität: 11.05.2007 CH 766072007
(43) Veröffentlichungstag der Anmeldung: 27.01.2010
(73) Patentinhaber: Brunner AG Maschinen und Pumpen, 8302 Kloten (CH)
(72) Erfinder: GRAF, Tobias, CH-5105 Auenstein (CH); GLAUSER, Markus, CH-8309 Nürensdorf (CH)
(74) Vertreter: Rösler, Uwe
(86) Internationale Anmeldenummer: PCT/CH2008/000201
(87) Internationale Veröffentlichungsnummer: WO 2008/138153

(56) Entgegenhaltungen:
- EP-A- 1 433 871
- EP-B1- 1 264 785
- DE-A1- 10 225 324
- KR-A- 20040 087 307
- NL-C1- 1 009 742
- US-A1- 2003 091 641

## Beschreibung

### Technisches Gebiet

Die vorliegende Erfindung betrifft eine Komponente einer der Verarbeitung von Nahrungsmitteln dienenden Maschine gemäss Anspruch 1. Sie betrifft auch ein Verfahren zur Herstellung einer solchen Komponente sowie auch die Verwendung resp. Anwendung einer solchen Komponente oder des Verfahrens.

### Stand der Technik

In der Nahrungsmittelindustrie, insbesondere dort wo es darum geht, Gemüse, Früchte, etc., durch Schneiden, Zerstückeln, Auspressen, etc., bereitzustellen, setzt man für die mit diesen Nahrungsmitteln in Berührung kommenden Oberflächen Stähle, vielfach auch Aluminiumlegierungen ein, dies stets mit dem finalen Zweck, eine bestmögliche mechanische Verschleissfestigkeit und hochwirksame chemische Beständigkeit gegen Säuren, Basen, Salzen, etc., zu erreichen. (vgl. dazu das Dokument EP 1 264 785). Selbst wenn die exponierten Oberflächen, also die am Verarbeitungsprozess beteiligten Flächen, bei erster Inbetriebsetzung noch über eine ansprechende Oberflächegüte verfügen und daher gute qualitative Voraussetzungen aufweisen, so lässt es sich nicht vermeiden, dass diese Oberflächen durch die mechanischen dort stattfindenden Belastungen bei der Verarbeitung von Nahrungsmitteln nach und nach einem gewichtigen Verschleiss unterworfen sind. Dieser Oberflächenverschleiss führt rasch durch die sich bildenden Mikro- oder Makroporen zu einer bakteriologischen Belastung der Oberfläche. Unmittelbar davon betroffen sind die dort verarbeiteten Nahrungsmittel, welche allenfalls in nicht unerheblichem Masse mit diesen Bakterien infiziert werden können, was insbesondere dann nicht tolerierbar ist, wenn diese Nahrungsmittel im Rohzustand zum Speiseplan gehören. Laboruntersuchungen von nahrungsmittelverarbeitenden Maschinen in Spitälern haben eindeutig ergeben, dass solche Oberflächen sehr rasch auch mit resistenten Bakterien infiziert werden können, so dass immer öfters mit immer stärkeren Desinfektionsmitteln dagegen vorgegangen werden muss, dies um einigermassen Gewähr zu bieten, dass die bakteriologische Belastung nicht Oberhand nimmt und zu kollateralen Gesundheitsschäden führen kann, insbesondere bei geschwächten oder frisch operierten Patienten.

Dieses massive Vorgehen mit immer stärkeren Desinfektionsmitteln führt aber unweigerlich zu resistenten Bakterien-Stämmen und darüber hinaus zu einer fortschleichenden Verschlechterung der Oberflächenbeschaffenheit dieser Teile selbst, was wiederum Vorschub leistet, dass sich Bakterienkolonien dort leicht einnisten können, was zu einem gravierenden hygienischen Problem und zu nicht absehbaren gesundheitlichen Folgen führen kann. Des weiteren darf nicht ausser Acht gelassen werden, dass der vielfach angewendeten Lösungsansatz, die Oberflächen kurz vor deren Einsatz immer wieder mit immer stärkeren Desinfektionsmitteln zu behandeln, weitere bedeutende gesundheitliche Risiken nach sich ziehen kann. Ferner darf nicht ausser Acht gelassen werden, dass gerade in der Nahrungsmittelindustrie mit grossen Verarbeitungsflächen gearbeitet wird, womit sich die gesundheitlichen Risiken überproportional erhöhen.

### Darstellung der Erfindung

Hier will die Erfindung Abhilfe schaffen. Der Erfindung, wie sie in den Ansprüchen gekennzeichnet ist, liegt die Aufgabe zugrunde, eine Oberfläche mit einer aktiven antimikrobiellen Wirkung für Komponenten von Nahrungsmittelmaschinen vorzuschlagen, welche aus einem äusserst verschleissfesten Material besteht, gleichzeitig soll dieses Material tauglich für die Einmischung von bakteriziden und/oder fungiziden Stoffe sein, dergestalt, dass die obengenannten Nachteile bei den zum Stand der Technik gehörenden Verarbeitungsoberflächen integral behoben werden können.

Wenn von einer bakteriziden Eigenschaft die Rede ist, so wird darunter die abtötende Wirkung einer Substanz, eines Stoffes oder einer Legierung auf Bakterien verstanden.

Stoffe mit fungizider Wirkung, wo sich eine solche Wirkung bei der Bereitstellung von aktiven Oberflächen als vorteilhaft erweist, sind bei den nachfolgenden Ausführungen erfindungsgemäss miteingeschlossen, werden aber nicht mehr jedes Mal speziell erwähnt.

Eine bakterizide und/oder fungizide Wirkung wird in der Anmeldung hie und da auch als antimikrobielle Wirkung bezeichnet.

Erfindungsgemäss wird ein Kunststoff, vorzugsweise ein Produkt auf Polymerbasis vorgeschlagen, das auf Grund gezielt eingebauter Nanoadditive bakterizide, allenfalls auch fungizide Eigenschaften besitzt, dies zunächst aus den Erkenntnissen heraus, dass Polymere der letzten Generation über hervorragende mechanische Eigenschaften verfügen, erstklassische chemische Beständigkeit aufweisen sowie stabile thermische und elektrische Eigenschaften gewährleisten, so dass deren Einsatz im vorliegenden Gebiet absolut gerechtfertigt und vorteilhaft ist.

Dabei mussten, ausgehend von der formulierten Aufgabenstellung, etliche Hürden überwunden und einige technische Probleme gelöst werden, damit eine in sich geschlossene erfinderische Lehre zum technischen Handeln eingebracht werden konnte.
1. Das fehlende Know how zur sicheren und wirtschaftlichen Herstellung von compoundierfähigen bakteriziden Nanopartikeln, die sich in taugliche Kunststoffe (Polymere) bestens homogen integrieren resp. sich in den Kunststoff direkt einmischen lassen, womit die Interdependenz zwischen dem zugrundegelegten Kunststoff und der angestrebten Beifügung des Zusatzstoffes ersichtlich wird.
   Compoundierung ist ein Begriff aus der Kunststofftechnik und beschreibt den Veredelungsprozess von Kunststoffen durch Beimischung von Zusatzstoffen zur gezielten Optimierung der Eigenschaftsprofile.
2. Da die benötigte Konzentration an bakteriziden Nanopartikeln im Kunststoff sehr gering ausfällt, um die angestrebte Wirkung zu erzielen, nämlich eine 100%ige Sterberate der häufigsten auftretenden Bakterien zu erreichen, konnte das Nanopulver bei der Herstellung der erfindungsgemässen Oberfläche bis anhin nicht richtig und homogen im ganzen Kunststoff verteilt werden. In Publikationen ist ferner auf die Tatsache hingewiesen worden, dass die geringe benötigte bakterizide Konzentration bei den angewendeten Prozessen nicht richtig und homogen im ganzen Kunststoff verteilt werden konnte.
   Bei der Nanopartikeltechnik geht es um Partikeln in einer Grössenordnung von 100 Milliardstel Meter, die bislang unbekannte chemische und physikalische Eigenschaften besitzen.
3. Ein grosses Problem beim bestimmungsgemässen Einsatz von Nanomaterialien ist sodann ihre leicht auftretende Agglomerat- resp. Aggregat- sowie Clusterbildung bei der Anwendung. Unter diesen Bedingungen kommt es zu einer starken Reduzierung der aktiven Oberfläche und somit auch zu einer starken Herabminderung des Grades der aus diesen beigefügten Stoffe ausgehenden bakteriziden Wirkung.
4. Ein weiteres Problem betrifft allenfalls die Haftfestigkeit der einmal eingebrachten Nanomaterialien im Zusammenhang mit dem Einsatz der aktiven Oberfläche bei der Verarbeitung von Nahrungsmitteln.

Die angestrebte Homogenität ist somit nur dann zu erreichen, wenn es gelingt, das verfahrenstechnische Problem bei der Einmischung von Nanoteilen in den Kunststoff zu lösen, nämlich Abhilfe gegen die Gefahr der Agglomerat- resp. Aggregat- sowie Clusterbildung zu schaffen, was impliziert, dass zusätzlich zu einem tauglichen Herstellungsverfahren des Kunststoffes, taugliche Nanoteile vorliegen müssen, welche sich bestimmungsgemäss in den Kunststoff einmischen lassen.

Erfindungsgemäss werden die oben aufgeschlüsselten Probleme dadurch gelöst, dass die an sich geringe Konzentrationsmenge des bakteriziden und/oder fungiziden Stoffes so in die Polymere eingebracht wird, dass das Endprodukt entsprechend eingesetzt werden kann.

Zur Erzielung einer homogenen und haftfesten Verteilung des eingemischten antmikrobiellen Stoffes, damit eine maximierte aktive Oberfläche des zum Einsatz gelangenden Polymers erzeilt werden kann, welche Verteilung in direkter Verbindung mit der bakteriziden, allenfalls der fungiziden Wirkung steht, wird eine mechanische Mischung der entsprechend pulverisierten Polymere mit den bakteriziden/fungiziden Nanoteilen zugrundegelegt, wobei diese Nanoteile im kolloidalen Zustand vorliegen.

Dabei steht der Grad des pulverisierten Polymers in engster Uebereinsimmung mit den eingemischten Nanoteilen.

Kolloidale sind die kleinsten Teilchen in die Materie zerlegt werden kann, ohne die individuellen Eigenschaften zu verlieren. Dabei handelt es sich bei einem Kolloid um ein System aus Clustern (bis 50'000 Atomen), die innerhalb eines Mediums fein verteilt sind. Diese Kolloidale aus Edelmetallen bleiben des Weiteren unter den unterschiedlichsten Bedingungen sehr stabil, wobei auch eine chemische Zersetzung nicht nachgewiesen werden konnte. Diese kolloidale Stabilität ist entscheidend für den vorgesehenen Einsatz und Wirkung dieser Stoffe als bakterizide Partikeln, denn die Wahl dieser Partikelgrösse ist entscheidend, dass eine kolloidale Stabilität entsteht, welche dann Abhilfe gegen die Bildung einer Aggregation, Agglomeration, Clusterbildung schafft.

Diese mechanische Mischung lässt sich vorzugsweise im Zusammenhang mit einem Extrudierungsprozess erreichen, wobei beim Extrudieren werden Kunststoffe oder andere zähflüssige härtbare Materialien in einem kontinuierlichen Verfahren durch eine Düse gepresst. Nach dem Austreten aus der Düse erstarrt der Kunststoff meist in einer wassergekühlten Kalibrierung.

Was den Kunststoff betrifft, wird erfindungsgemäss vorgeschlagen, ein lineares, aromatisches, kristallines oder quasikristallines Polymer zugrunde zu legen, das beste Voraussetzungen bietet, durch die erfolgreiche Einbindung von nanoskaligen Partikeln zu einem einsatzfähigen bakteriziden Polymer zu gelangen.

Die Tauglichkeit und damit die Vorteile dieses Polymers sind erfindungsgemäss in zweifacher Hinsicht gegeben: Auf der einen Seite stellt dieses Polymer sicher, dass die Einbindung der bakteriziden, allenfalls fungiziden, Partikeln erfolgreich bewerkstelligt wird; auf der anderen Seite weist dieses Polymer eine hohe Leistungsfähigkeit auf. So hinsichtlich seiner Verschleissfestigkeit, wobei Versuche ergeben haben, dass beim bestimmungsgemässen Einsatz kein messbarer Partikelabrieb festgestellt wurde. Des weiteren sind die Festigkeit und die übrigen mechanischen Eigenschaften dieses Polymers so gestaltet, dass keine Einschränkungen auszumachen sind, welche gegen seinen erfindungsgemässen Einsatz sprächen. Was auch für dieses Polymer spricht, ist seine Reinheit und die extrem geringe Extrahierbarkeit, womit es hervorragend für den Kontakt mit Nahrungsmitteln geeignet ist. Auch seine Chemikalienbeständigkeit weist hervorragende Werte auf, so verhält es sich inert in den allermeisten chemischen Milieus, ist dampfunempfindlich und weist praktisch keine Feuchtigkeitsabsorption auf, was sich insbesondere bei der Verarbeitung von Früchten und Gemüsen als sehr vorteilhaft erweist. Auch seine elektrische Isolierung lässt sich als stabil bezeichnen. Seine Wärmefestigkeit ist bis zu Temperaturen von 250°C intakt. Was darüber hinaus noch für den erfindungsgemässen Einsatz dieses Polymers spricht, ist seine ausgesprochene hervorragende Haftfähigkeit gegenüber einem anwendbaren Trägermaterial, womit die eingesetzten Komponenten nicht notgedrungen aus einem einzigen Polymerkörper bestehen müssen, sondern es bietet sich hier auch noch die Möglichkeit an, auf einem Trägermaterial eine Schicht dieses Polymers zu basieren.

Weitere Versuche haben auch ergeben, dass nebst den linearen Polymeren auch solche mit einer verzweigten oder vernetzten Struktur zu entsprechenden guten Resultaten geführt haben, dies abhängig vom jeweiligen Einsatz.

Versuche haben des Weiteren aufgezeigt, dass gezielte Additive für Polymere als Träger erfolgreich verwenden werden können, um bei Bedarf eine bessere Dosierung und Verteilung des bakteriziden Stoffes zu bewerkstelligen sowie zur Erhöhung der einsatzmässigen Beständigkeit des Polymers selbst.

Wenn oben in einigen Ausführungen Silber in Alleinstellung als Stoff mit bakterizider Wirkung erwähnt ist, so ist zu präzisieren, dass auch andere Metalle wie Gold, Kupfer, etc., eine bakterizide Wirkung haben. Möglich sind auch Legierungen aus Silber und Gold sowie Kupfer und Gold. Eher nicht möglich Silber-KupferLegierungen.

In diesem Zusammenhang ist aus Laborversuchen hervorgegangen, dass beim bakteriziden Stoff "Silber" eine Konzentration von 0,01 bis 1 Gew. % in den meisten Fällen vollauf genügt, um eine 100%ige Sterberate der häufigsten auftretenden Bakterien zu erreichen. Je nach Einsatz und verfolgter Wirkung sind weitergehende Konzentrationen bis zu 5 Gew. % nicht ausgeschlossen.

Erfindungsgemäss lassen sich auch zwei oder mehrere kolloidale bakterizide Stoffe in den Polymeren homogen dispergieren, wobei in casu die Dispergierung eine gleichmässige Verteilung umschreibt, bei welcher das Ziel dieses Prozesses darin besteht, die vollständige Zerteilung eines sich bildenden Agglomerats und die gleichmässige Verteilung der Primärpartikeln im System sowie die dauerhafte Stabilisierung dieses Zustandes zu erreichen.

Die Anwendung- resp. Verwendungsmöglichkeit des erfindungsgemässen Gegenstandes sind vorzugsweise dort zu sehen, wo es darum geht, bei der Verarbeitung von Nahrungsmitteln eine nachhaltige Abhilfe gegen die Infizierung durch Bakterien und Fungizide zu schaffen.

Die folgende Aufzählung betrifft ein Einsatzfeld des erfindungsgemässen Gegenstandes, wobei diese Liste nicht abschliessend ist.
- Gemüseschneidemaschinen,
- Cutter,
- Zitruspressen,
- Saftzentrifugen,
- Aufschnittmaschinen,
- Küchenmaschinen,
- und andere Nahrungsmittelmaschine.

Die Einsatzmöglichkeit des Erfindungsgegenstandes beschlägt indessen auch andere Anwendungen in der Nahrungsmittelverarbeitung.

Vorteilhafte und zweckmässige Weiterbildungen der erfindungsgemässen Aufgabenlösung sind in den weiteren abhängigen Ansprüchen gekennzeichnet.

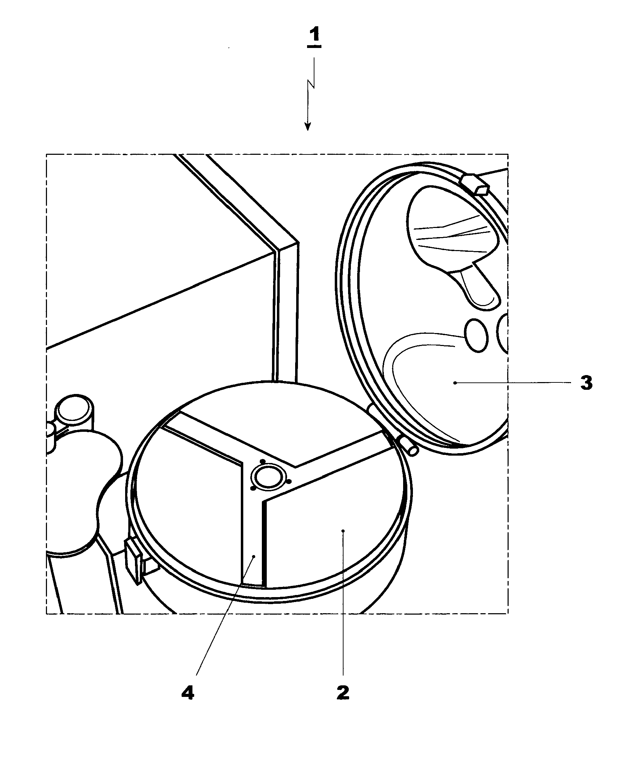

Im folgenden wird anhand der Zeichnung ein Ausführungsbeispiel der Erfindung näher erläutert. Alle für das unmittelbare Verständnis der Erfindung unwesentlichen Merkmale sind fortgelassen worden.

### Kurze Beschreibung der Figur

Die einzige Figur zeigt einen Ausschnitt einer Gemüseschneidemaschine, mit entsprechenden Schneidscheiben.

### Wege zur Ausführung der Erfindung, gewerbliche Verwendbarkeit

Die Figur zeigt einen typischen Einsatz des erfindungsgemässen Gegenstandes. Bei einer Gemüseschneidmaschine 1 ist insbesondere die Schneidscheibe 2, welche nun werkstoffmässig neu definiert wird. Dies ist indessen nicht ausschliesslich zu verstehen, denn auch die anderen Flächen von solchen Maschinen, hier beispielsweise die Abdeckfläche 3, lassen sich ohne weiteres mit dem Erfindungsgegenstand ausrüsten.

Die Schneidscheibe 2 besteht nunmehr aus einem Polymer, dass während seiner Herstellung eine Zumischung von Nanoadditiven erfährt, welche bakterizide Eigenschaften aufweisen, und so dafür sorgen, dass eine unmittelbare Abtötung der Bakterien erfolgt. Selbstverständlich können hier auch fungizide Nanoadditive zugemischt werden (Stoffe mit fungizider Wirkung sind in den nachfolgenden Betrachtungen daher nicht ausgeschlossen).

Soll nun die Schneidscheibe 2 aus einem solchen Polymer hergestellt werden, und als Ersatz zu den üblichen Metallanfertigungen dienen, so müssen die physikalischen Werkstoffseigenschaften eines solchen Polymers gegenüber denjenigen der zum Einsatz gelangenden Edelstähle nicht abfallen. Dies bedeutet, dass dies nicht nur die mechanischen Eigenschaften tangiert, sondern auch erstklassische chemische Beständigkeiten vorhanden sein müssen, und darüber hinaus muss dieses Polymer stabile thermische und elektrische Eigenschaften aufweisen. Solche Voraussetzungen werden durch ein lineares, aromatisches, kristallines oder quasikristallines Polymer erbracht, wobei bisweilen auch ein verzweigtes oder vernetztes Polymer zum Einsatz gelangen kann. Was dieses Polymer darüber hinaus besonders auszeichnet, ist seine hohe Verschleissfestigkeit gegen einen Partikelabrieb, eingedenk der Tatsache, dass im Bereich der in die Schneidscheibe 2 integrierten Messer 4 während der Verarbeitung der Nahrungsmittel hohe Scherkräfte entstehen, welche leicht einen Partikelabrieb verursachen könnten, wäre die notwendige Abriebfestigkeit des Polymers nicht gegeben. In unserem Fall lässt sich dieses Polymer auch unter diesem Aspekt uneingeschränkt zum Einsatz bringen.

Das für die Schneidscheibe 2 zum Einsatz gelangende Polymer weist darüber hinaus die Eigenschaft, dass es sich bestens mit antimikrobiellen (bakteriziden und/oder fungiziden) Stoffen vermischen lässt, dergestalt, dass eine solche Schneidscheibe 2 eine homogene Verteilung der eingemischten antimikrobiellen Stoffe aufweist, und so die Voraussetzung erfüllt, eine maximierte Wirkung gegen auftretende Mikroben zu entfalten, was nicht der Fall wäre, wenn die bakteriziden resp. fungiziden Stoffe während des Mischvorganges zu einer Agglomeration, Aggregation oder Clusterbildung neigen würden, denn dann wäre die von der Oberfläche ausgehende antimikrobielle Wirkung stark eingeschränkt.

Sonach ist angedeutet, dass es nicht nur auf die Eigenschaften des Polymers ankommt, sondern auch die zum Einsatz gelangenden bakteriziden Stoffe müssen in einem Zustand vorliegen, der die angestrebten Eigenschaften am Endprodukt ermöglichen. Dies lässt sich erreichen, indem kolloidale Partikeln des bakteriziden Stoffes eingesetzt werden, welche Partikeln auf dem Weg einer mechanischen Mischung mit dem Grundmaterial des Polymers die maximierte Verteilungshomogenität ermöglichen, und welche Verteilungshomogenität eine Grundvoraussetzung ist, dass die bakterizide Wirkung über die ganze Fläche der Schneidscheibe gleichmässig und konstant erfolgt. Eine gute mechanische Mischung lässt sich dann erreichen, wenn die Herstellung des Polymers im Extrudierverfahren erfolgt.

Am Beispiel von kolloidalen Partikeln aus Silber soll hier kurz die bakterizide Wirkung dieses Stoffes aufgezeigt werden. Die aktiven Wirkstoffe sind hier die Silberionen, welche sich von der Silberoberfläche lösen, und so die bakterizide Wirkung inizieren. Damit ist der Kreis zu den obigen Ausführungen geschlossen, insoweit, als dort eine aktive Fläche postuliert wurde, welche homogen mit diesen Partikeln versetzt sein muss, um die grösstmögliche bakterizide Wirkung zu erhalten. Diese Silberionen haben die Fähigkeit, Bakterienzellen an verschiedenen Orten simultan anzugreifen und so diese Bakterien lahm zu legen. Die starke Wirkung dieser Silberionen lässt sich darin ablesen, dass diese mindestens Zellwand, Zellmembran, Proteine, Enzyme, DNA dieser Bakterienzellen angreifen, womit essentielle Zellbestandteile blockiert resp. zerstört werden. Durch diese mehrfachen Eingriffsorte der Silberionen auf die Bakterienzelle sind aufkommende Resistenzen ausgeschlossen, d.h. die Bakterien sind gar nicht mehr in der Lage, eine irgendwie geartete Resistenz gegen die Silberionen zu entwickeln, was relevant ist, vergleicht man dies mit der Problematik der resistenten Stämme bei Antibiotika.

Eine weitere verblüffende Wirkung beim Einsatz von kolloidalen Partikeln aus Silber ist die äusserst geringe Menge, welche für eine 100%ige Sterberate der Bakterien nötig ist. Gegen die bei Nahrungsmitteln typischerweise auftretenden Mikroorganismen haben Laborversuche aufgezeigt, dass eine Sterberate von 100% bereits bei einer Konzentration von 0,01-1,0 Gew % Silber im gesamten Polymer erreichbar ist. Ist eine grössere Infizierung durch Mikroorganismen zu erwarten, lässt sich ohne weiteres die Konzentration entsprechend erhöhen, wobei weitere Versuche ergeben haben, dass ab ca. 5% eine asymptotische Verflachung der antimikrobiellen Wirkung zu beobachten ist.

Durch die hohe Verschleissfestigkeit des eingesetzten Polymers und auf Grund der geringen Mengen des beigemischten elementaren Silbers ist dieses für den Menschen völlig unbedenklich, auch weil die freigesetzte Menge an Silberionen äusserst gering ist, jedoch reichen gerade diese geringen Mengen aus, um Mikroorganismen unschädlich zu machen. Beim Gebrauch von Silber sind auch keine toxischen gefahren beim Menschen bekanntgeworden.

Mit anderen Worten: Im Vergleich zu anderen Antiseptika, hat Silber den Vorteil, dass es bereits bei kleinen Konzentrationen gegen ein breites Spektrum an Bakterien/Fungiziden lang anhaltend wirkt, ohne dabei giftig zu sein.

Die Einmischung eines bakteriziden Stoffes ist nicht auf Silber beschränkt. Auch andere Stoffe, beispielsweise Gold, Kupfer, etc. entfalten antimikrobielle (bakterizide, fungizide) Eigenschaften, welche Stoffe von Fall zu Fall in Alleinstellung, in Kombination zueinander oder als Legierungen eingesetzt werden können.

## Patentansprüche

1. Komponente einer der Verarbeitung von Nahrungsmitteln dienenden Maschine, wobei diese Komponente mindestens aus einem Kunststoffteil besteht, wobei mindestens eine Oberfläche dieses Kunststoffteils mit den Nahrungsmitteln bei unterschiedlichem Aggregatzustand unmittelbar betroffen oder beaufschlagt ist, und wobei mindestens diese Oberfläche durch antimikrobielle Partikeln eine bakterizide Wirkung aufweist, **dadurch gekennzeichnet,**
a) **dass** der Kunststoffteil physikalische und chemische Eigenschaften aufweist, dergestalt, dass mindestens die mit den Nahrungsmitteln betroffene Oberfläche eine Verarbeitungsfläche bildet,
b) **dass** der Kunststoffteil durch eine auf eine mechanische Mischung zwecks einer homogenen Dispergierung zwischen einem pulverisierten Kunststoffmaterial und den eingemischten antimikrobiellen Partikeln herstellbar ist,
c) und **dass** die antimikrobiellen Partikeln in kolloidaler Form vorliegen.

2. Komponente nach Anspruch 1, **dadurch gekennzeichnet, dass** die ganze Komponente integral aus einem Körper aus diesem Kunststoff besteht, oder dass der Kunststoff aus einer unterschiedlich dick gehaltenen aktiven Oberfläche besteht, welche auf Grundmaterialien applizierbar ist.

3. Komponente nach Anspruch 2, **dadurch gekennzeichnet, dass** das Grundmaterial ein Edelstahl ist.

4. Komponente nach Anspruch 1, **dadurch gekennzeichnet, dass** der Kunststoff aus einem linearen, aromatischen, kristallinen oder quasi-kristallinen Polymer besteht.

5. Komponente nach Anspruch 1, **dadurch gekennzeichnet, dass** der Kunststoff aus einem verzweigten oder vernetzten, aromatischen, kristallinen oder quasi-kristallinen Polymer besteht.

6. Komponente nach Anspruch 1, **dadurch gekennzeichnet, dass** es sich bei dem antimikrobiellen Stoff um bakterizide, fungizide Partikeln handelt.

7. Komponente nach Anspruch 6, **dadurch gekennzeichnet, dass** für die von der aktiven Oberfläche ausgehende bakterizide und/oder fungizide Wirkung ein kolloidales Silber eingesetzt ist.

8. Komponente nach Anspruch 7, **dadurch gekennzeichnet, dass** Silber mit einem Anteil von 0,01 - 5 Gew. % in den Kunststoff einmischbar ist.

9. Komponente nach einem der Ansprüche 1-8, **dadurch gekennzeichnet, dass** für die von der aktiven Oberfläche ausgehende bakterizide und/oder fungizide Wirkung kolloidale Silber und/oder Gold und/oder Kupfer einsetzbar sind.

10. Komponente nach einem der Anspruche 1-8, **dadurch gekennzeichnet, dass** für die von der aktiven Oberfläche ausgehende bakterizide und/oder fungizide Wirkung Legierungen aus kolloidalen Silber und Gold, oder aus kolloidalen Gold und Kupfer einsetzbar sind.

11. Verfahren zur Herstellung einer Komponente nach einem oder mehreren der Ansprüche 1-10, **dadurch gekennzeichnet, dass** die antimikrobiellen kolloidalen Partikeln durch einen mechanischen Mischungsprozess in den entsprechend pulverisierten Kunststoff eingemischt werden, dergestalt, dass damit eine homogene Dispergierung der antimikrobiellen kolloidalen Partikeln erzielt wird.

12. Verfahren nach Anspruch 11, **dadurch gekennzeichnet, dass** der Mischungsprozess zwischen Kunststoff und Partikeln bei einem Extrudierungsprozess erfolgt.

13. Verfahren nach einem der Ansprüche 11 oder 12, **dadurch gekennzeichnet, dass** der Mischungsprozess unter Beifügung mindestens eines auf eine maximierte Dispergierung der antimikrobiellen kolloidalen Partikeln gerichteten Additivs durchgeführt wird.

14. Verwendung oder Anwendung der Komponente nach einem oder mehreren der Ansprüche 1-13 für Gemüseschneidmaschine.

## Claims

1. Component of a machine which serves to process food products, wherein this component consists of at least one plastic part, wherein at least one surface of this plastic part is directly contacted or impacted by the food products in different states of matter, and wherein at least this surface has a bactericidal activity due to antimicrobial particles, **characterized**
a) **in that** the plastic part has physical and chemical properties such that at least the surface contacted by the food products forms a processing surface,
b) **in that** the plastic part can be produced by mechanical mixing with the aim of a homogeneous dispersion between a pulverized plastics material and the incorporated antimicrobial particles,
c) and **in that** the antimicrobial particles are present in colloidal form.

2. Component according to Claim 1, **characterized in that** the entire component consists integrally of a body made of this plastic, or that the plastic consists of an active surface kept in differing thickness, which active surface can be applied to base materials.

3. Component according to Claim 2, **characterized in that** the base material is a stainless steel.

4. Component according to Claim 1, **characterized in that** the plastic consists of a linear, aromatic, crystalline or quasicrystalline polymer.

5. Component according to Claim 1, **characterized in that** the plastic consists of a branched or crosslinked, aromatic, crystalline or quasicrystalline polymer.

6. Component according to Claim 1, **characterized in that** the antimicrobial substance is bactericidal fungicidal particles.

7. Component according to Claim 6, **characterized in that** a colloidal silver is used for the bactericidal and/or fungicidal action proceeding from the active surface.

8. Component according to Claim 7, **characterized in that** silver can be incorporated into the plastic with a fraction of 0.01-5% by weight.

9. Component according to any one of Claims 1-8, **characterized in that** colloidal silver and/or gold and/or copper are useable for the bactericidal and/or fungicidal action proceeding from the active surface.

10. Component according to any one of Claims 1-18, **characterized in that** alloys of colloidal silver and gold or of colloidal gold and copper, are useable for the bactericidal and/or fungicidal action proceeding from the active surface.

11. Method for producing a component according to one or more of Claims 1-10, **characterized in that** the antimicrobial colloidal particles are incorporated into the appropriately pulverized plastic by a mechanical mixing process, such that a homogeneous dispersion of the antimicrobial particles is achieved thereby.

12. Method according to Claim 11, **characterized in that** the mixing process between plastic and particles proceeds in an extrusion process.

13. Method according to either of Claims 11 or 12, **characterized in that** the mixing process is carried out with addition of at least one additive directed towards a maximized dispersion of the antimicrobial colloidal particles.

14. Use or application of the component according to one or more of Claims 1-13 for a vegetable cutting machine.

## Revendications

1. Composant d'une machine servant au traitement de produits alimentaires, ce composant étant constitué d'au moins une partie en plastique, au moins une surface de cette partie en plastique étant directement touchée par ou exposée aux produits alimentaires à différents états d'agrégation, et au moins cette surface présentant grâce à des particules antimicrobiennes un effet bactéricide, **caractérisé en ce que**
a) la partie en plastique présente des propriétés physiques et chimiques telles qu'au moins la surface touchée par les produits alimentaires forme une surface de traitement,
b) la partie en plastique peut être fabriquée par mélange mécanique dans le but d'une dispersion homogène d'un matériau plastique pulvérisé et des particules antimicrobienne incorporées,
c) et les particules antimicrobiennes se présentent sous forme colloïdale.

2. Composant selon la revendication 1, **caractérisé en ce que** l'ensemble du composant est constitué intégralement d'un corps en ce plastique ou **en ce que** le plastique est constitué d'une surface active maintenue d'épaisseur différente, qui peut être appliquée sur des matériaux de base.

3. Composant selon la revendication 2, **caractérisé en ce que** le matériau de base est un acier inoxydable.

4. Composant selon la revendication 1, **caractérisé en ce que** le plastique est constitué d'un polymère linéaire, aromatique, cristallin ou quasi-cristallin.

5. Composant selon la revendication 1, **caractérisé en ce que** le plastique est constitué d'un polymère ramifié ou réticulé, aromatique, cristallin ou quasi-cristallin.

6. Composant selon la revendication 1, **caractérisé en ce que** la substance antimicrobienne consiste en des particules bactéricides, fongicides.

7. Composant selon la revendication 6, **caractérisé en ce qu'**un argent colloïdal est utilisé pour l'effet bactéricide et/ou fongicide de la surface active.

8. Composant selon la revendication 7, **caractérisé en ce que** l'argent peut être incorporé dans le plastique en une proportion de 0,01 à 5 % en poids.

9. Composant selon l'une quelconque des revendications 1 à 8, **caractérisé en ce que** de l'argent et/ou de l'or et/ou du cuivre colloïdaux peuvent être utilisés pour l'effet bactéricide et/ou fongicide de la surface active.

10. Composant selon l'une quelconque des revendications 1 à 8, **caractérisé en ce que** des alliages d'argent et d'or colloïdaux ou d'or et de cuivre colloïdaux peuvent être utilisés pour l'effet bactéricide et/ou fongicide de la surface active.

11. Procédé de fabrication d'un composant selon une ou plusieurs des revendications 1 à 10, **caractérisé en ce que** les particules colloïdales antimicrobiennes sont incorporées par un processus de mélange mécanique dans le plastique pulvérisé de manière appropriée, afin d'obtenir une dispersion homogène des particules colloïdales antimicrobiennes.

12. Procédé selon la revendication 11, **caractérisé en ce que** le processus de mélange entre le plastique et les particules a lieu par un processus d'extrusion.

13. Procédé selon l'une quelconque des revendications 11 ou 12, **caractérisé en ce que** le processus de mélange est réalisé avec ajout d'au moins un additif permettant une dispersion maximisée des particules colloïdales antimicrobiennes.

14. Utilisation ou application du composant selon une ou plusieurs des revendications 1 à 13 pour une machine à couper les légumes.
